# FASCICULE DE BREVET EUROPEEN

(11) **EP 1 179 462 B1**
(45) Date de publication et mention de la délivrance du brevet: **24.10.2007**
(21) Numéro de dépôt: 01402062.2
(22) Date de dépôt: 30.07.2001
(51) Int. Cl.: B60T 7/10

(54) **Dispositif de commande d'un frein de stationnement électrique d'un véhicule automobile**
Steuervorrichtung für eine elektrische Kraftfahrzeugfeststellbremse
Control device of a motor vehicle electric parking brake

(30) Priorité: 31.07.2000 FR 0010079
(43) Date de publication de la demande: 13.02.2002
(73) Titulaire: Dura France, 60730 Cauvigny (FR)
(72) Inventeur: Waltregny, Jean-Paul, 89140 Pont sur Yonne (FR)
(74) Mandataire: Habasque, Etienne J. Jean-François

(56) Documents cités:
- EP-A- 0 978 432
- WO-A-00/20268
- FR-A- 2 691 934

## Description

La présente invention concerne un dispositif de commande d'un frein de stationnement électrique d'un véhicule automobile, du type comportant un bâti à l'intérieur duquel sont reçus un transducteur et un mécanisme à commande manuelle d'actionnement du transducteur, le transducteur étant adapté pour produire un signal de commande du frein de stationnement.

Dans les véhicules automobiles modernes, le frein de stationnement, permettant d'immobiliser les roues alors que le véhicule est à l'arrêt, comporte un actionneur électrique permettant le serrage et le desserrage des mâchoires du frein.

Cet actionneur électrique est commandé au travers d'un faisceau de fils conducteurs à l'aide d'un dispositif de commande accessible depuis le tableau de bord du véhicule. Ce dispositif de commande est constitué par exemple d'un interrupteur à deux positions, ces deux positions correspondant, respectivement, à un état serré des mâchoires du frein et à un état desserré de celles-ci.

Un tel dispositif de commande est d'un maniement malaisé et risque, s'il est heurté par mégarde, de provoquer l'actionnement du frein de stationnement alors que le véhicule roule.

EP 0 978 432 A1 décrit un dispositif comprenant un levier de commande pourvu d'un interrupteur dont une position commande le serrage du frein

L'invention a pour but d'apporter une solution à ce problème du maniement accidentel de moyens de commutation à plusieurs positions.

A cet effet, l'invention a pour objet un dispositif de commande d'un frein de stationnement électrique d'un véhicule automobile, selon la revendication 1.

Des modes particuliers de réalisation sont définis par les revendications 2 à 10.

L'invention a également pour objet un frein de stationnement électrique comportant un actionneur électrique relié à un dispositif de commande tel que défini ci-dessus.

L'invention sera mieux comprise à la lecture de la description qui va suivre, donnée uniquement à titre d'exemple et faite en se référant aux dessins :

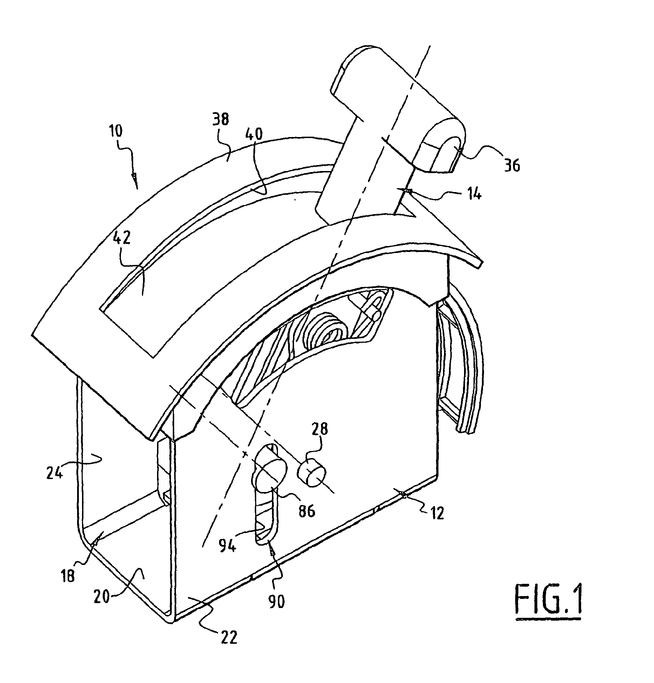

- la figure 1 est une vue en perspective du dispositif de commande selon l'invention dans son état assemblé ;
- la figure 2 est une vue en perspective éclatée du dispositif de la figure 1 ;
- la figure 3 est une vue en perspective montrant les éléments principaux assemblés du mécanisme à commande manuelle du dispositif des figures 1 et 2 ;
- les figures 4 et 5 sont des vues en élévation prises des deux côtés du dispositif de commande selon l'invention ; et
- la figure 6 est une vue schématique du frein de stationnement illustrant le fonctionnement du dispositif de commande.

Le dispositif de commande représenté aux figures est destiné à la commande d'un frein de stationnement électrique d'un véhicule automobile. Ce frein de stationnement comporte un actionneur agissant, par exemple par l'intermédiaire de câbles, sur les mâchoires de moyens de freinage associés à chacune des roues du véhicule.

Ce dispositif de commande est destiné à être implanté dans l'habitacle du véhicule en étant accessible depuis le poste de conduite.

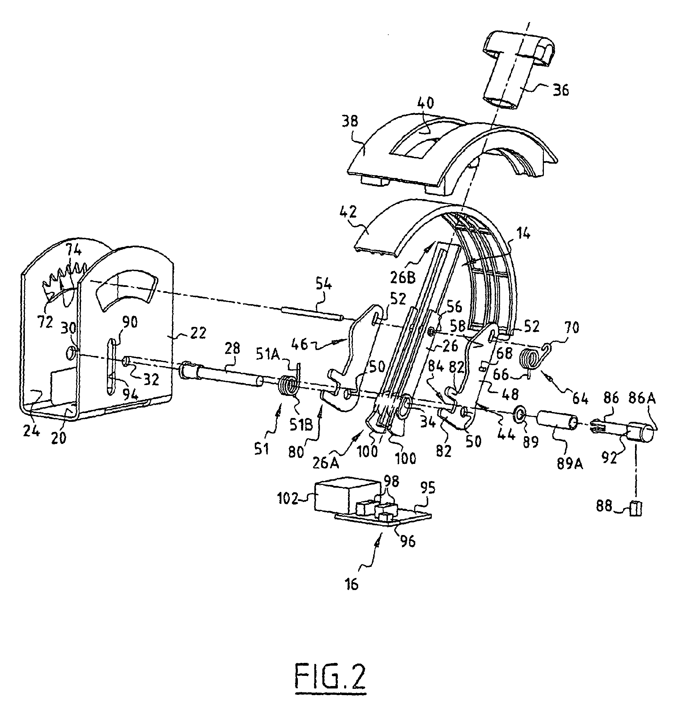

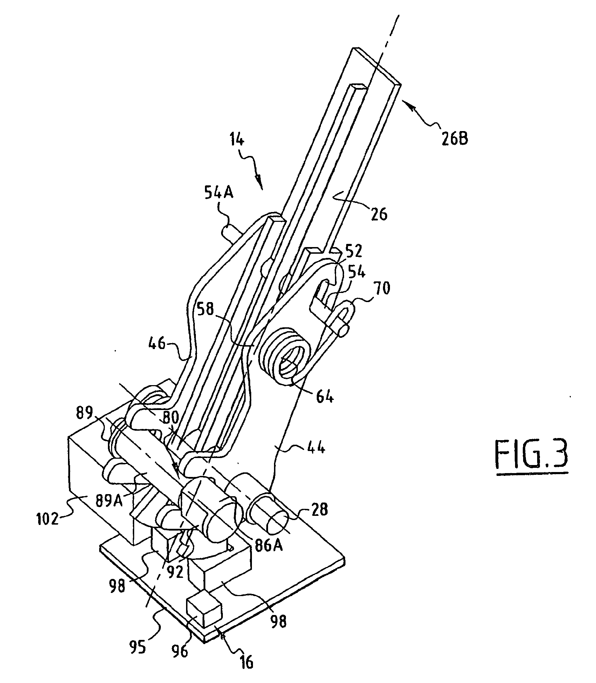

Il comporte essentiellement un bâti 12, un levier 14 à la fois articulé par rapport au bâti et déplaçable en translation par rapport à celui-ci, ainsi qu'un transducteur 16 logé à l'intérieur du boîtier. Ce transducteur visible sur les figures 2 et 3 est adapté pour produire un signal électrique de commande du frein de stationnement en fonction de la position du levier 14.

Le bâti 12 est destiné à être solidarisé à la structure du véhicule. Il est constitué d'une chape 18 comportant une embase 20 et deux parois latérales 22, 24 s'étendant parallèlement l'une à l'autre. L'essentiel du mécanisme du dispositif de commande est reçu et supporté entre les parois 22 et 24.

Le levier 14 présente un bras rectiligne 26 réalisé en matière plastique. Il est articulé autour d'un arbre 28. Cet arbre 28 est supporté à chacune de ses extrémités dans des perçages circulaires 30, 32 ménagés dans les parois latérales 22 et 24 du bâti.

Le bras 26 présente, au voisinage d'une extrémité d'articulation 26A, une lumière oblongue 34 de passage de l'arbre 28. L'arbre 28 peut ainsi circuler suivant la longueur de la lumière 34 lors d'un mouvement en translation du bras. La lumière oblongue 34 a son axe le plus long dirigé suivant l'axe du bras, permettant ainsi un déplacement en translation du bras 26 par rapport au bâti 12 suivant l'axe du bras.

Une poignée 36 est rapportée à la seconde extrémité 26B du bras 26, cette extrémité formant une extrémité de commande manuelle.

Un cadre de parement 38 est supporté par les extrémités libres des parois latérales 22 et 24. Ce cadre 38 présente une forme courbe généralement cylindrique dont l'axe est constitué par l'axe de l'arbre 28 lorsque le cadre est monté sur le bâti 12.

Ce cadre 38 délimite une fente 40 en forme d'arc de cercle s'étendant dans le plan médian défini entre les parois latérales 22 et 24. Le bras 26 traverse la fente 40, de sorte que son extrémité de commande 26B, munie de la poignée 36, s'étend au dehors de l'espace délimité par les parois latérales 22 et 24. La fente 40 permet le débattement angulaire du bras 26.

En outre, le bras 26 porte une jupe cylindrique 42 solidarisée au bras à la base de la poignée 36. Cette jupe a une courbure sensiblement identique à celle du cadre 38. En position assemblée, la jupe 42 s'étend le long du cadre 38 et obture la fente 40.

Deux flasques identiques 44, 46 sont disposés de part et d'autre du bras 26 suivant la longueur du bras 26. Ces flasques présentent une forme générale allongée et définissent une jambe 48. Ils sont montés rotatifs autour de l'arbre 28 en étant entraînés en rotation par le bras 26. Chaque flasque présente, à une extrémité proximale, un perçage circulaire 50 engagé autour de l'arbre 28. Ainsi, les flasques sont articulés autour de l'arbre 28, sans possibilité de déplacement en translation par rapport au bâti 14.

Un ressort hélicoïdal 51 est engagé autour de l'arbre 28. Une première extrémité 51A du ressort prend appui sur un pion ménagé sur la face extérieure du flasque 46. La seconde extrémité 51B du ressort s'applique sur un pion ménagé sur la surface intérieure de la paroi 24. Le ressort 51 est adapté pour solliciter le bras 26 solidaire en rotation des flasques 44, 46 vers une position prédéterminée constituée d'une portion extrême du bras. Cette position correspond avantageusement à l'état desserré du frein de stationnement.

La jambe 48 de chaque flasque s'étend le long du bras 26 et se prolonge depuis son extrémité proximale jusqu'à une extrémité distale située dans la partie médiane du bras 26.

A leur extrémité distale, les jambes 48 présentent chacune une lumière oblongue 52 dont l'axe s'étend suivant la direction du bras 26. Une tige transversale 54 de liaison en rotation des flasques 44, 46 et du bras 26 est engagée au travers des lumières oblongues 52. Cette tige traverse de part en part transversalement le bras 26 au travers d'un passage 56 de section complémentaire à celle de la tige 54. Ainsi, la tige 54 est immobilisée en translation par rapport au bras 56, alors que celle-ci est déplaçable à coulissement suivant la longueur des lumières 52.

Entre les perçages 50 et les lumières oblongues 52, les bras 50 présentent latéralement dans leur partie médiane des excroissances 58. Sur la surface extérieure de l'excroissance du flasque 44 s'applique un ressort hélicoïdal en spirale 64 de sollicitation du bras 26 dans un sens tendant à écarter son extrémité de commande 26B de l'arbre 28.

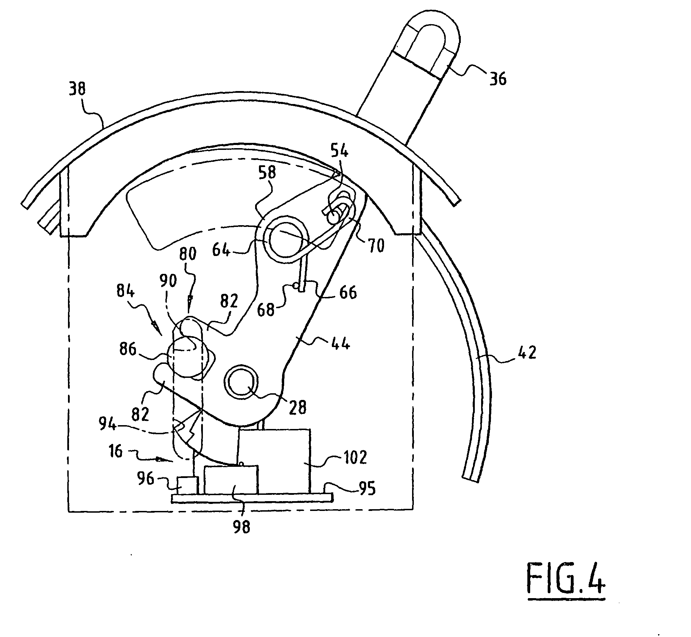

Comme illustré sur la figure 4, l'une des extrémités 66 du ressort prend appui sur une saillie 68 ménagée sur la surface extérieure de l'un des flasques 44.

L'autre extrémité, notée 70, du ressort présente une forme de crosse et est engagée autour d'une extrémité de la tige 54 se prolongeant au-delà de la lumière 52.

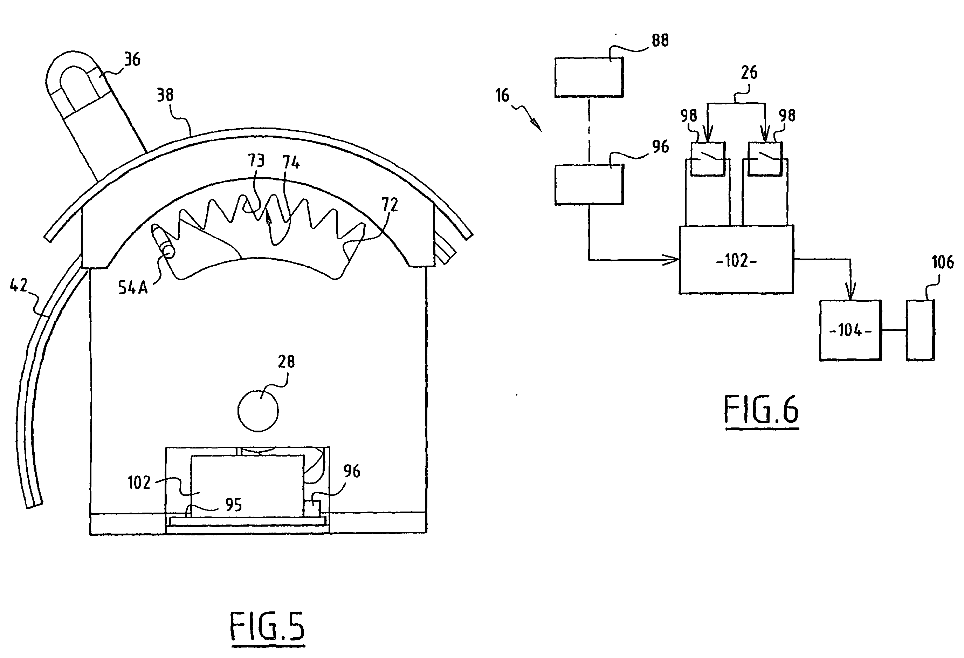

L'autre extrémité de l'arbre 54 notée 54A se prolonge au-delà du flasque 44. Elle est reçue dans une lumière 72 définie dans la paroi latérale 24 du bâti. Cette lumière, visible sur la figure 5, est de forme générale arquée. Elle présente, sur son flanc 73 tourné vers l'extrémité libre de la paroi 24, une succession de dents délimitant entre elles des encoches 74 de réception de l'extrémité de la tige 54 sollicitée par le ressort 64. Ainsi, le flanc 73 forme un peigne.

Par ailleurs, chaque flasque 44, 46 délimite, au voisinage de son extrémité proximale engagée autour de l'arbre 28, une fourche 80 dont les deux bras parallèles 82 délimitent une encoche 84 dans laquelle est reçu un corps cylindrique 86 de support d'un aimant 88. Ces derniers forment une première partie du transducteur 16.

Le corps 86 est constitué d'un goujon s'étendant transversalement aux flasques 44, 46. Ce goujon fait saillie par rapport à ceux-ci de part et d'autre des encoches 84.

Le goujon 86 présente, à une extrémité, une tête 86A munie d'un logement de réception de l'aimant 88. A son autre extrémité, il présente des saillies extérieures d'enclenchement élastiques adaptées pour coopérer avec une rondelle 89 pour assurer la retenue du corps sur les flasques 44, 46. La partie médiane du goujon 86 est reçue dans un manchon de protection 89A.

La tête 86A du goujon s'étend au travers de la paroi latérale 22 dans une fente 90 de forme oblongue dirigée perpendiculairement à l'embase 20 du bâti. Cette tête présente au moins un méplat 92 adapté pour coopérer avec un bord rectiligne 94 de la fente afin de maintenir une orientation constante de l'aimant 88.

Le transducteur 16 comporte un capteur à effet hall 96 disposé au droit de l'aimant 88 sur une platine 95, rapportée sur l'embase 20 du bâti. Cette platine 95 est constituée d'un circuit imprimé. La platine supporte également deux contacts 98 disposés sensiblement à la verticale de l'extrémité articulée 26A du bras.

Cette extrémité présente deux surfaces de came 100 formant des arcs de cercle centrés sur l'axe de l'arbre 28 lorsque celui-ci est reçu à l'extrémité de la lumière 34 tournée vers l'extrémité de commande 26B du bras. Ces deux surfaces de came 100 sont adaptées pour provoquer l'enfoncement des contacts 98 lorsque le bras 96 est enfoncé par appui sur la poignée 36 à l'encontre de l'action du ressort de rappel 64 et est ainsi déplacé en translation vers les contacts 98.

En outre, une unité de traitement d'informations 102 est montée sur la platine 95. Elle est reliée au capteur à effet hall 96 et aux deux contacts 98; comme illustré sur la figure 6. L'unité de traitement d'informations 102 peut avantageusement être disposée non pas sur la platine 95 mais directement dans l'actionneur du frein de stationnement. Des câbles de connexion relient alors le capteur 96 et les contacts 98 à l'unité 102 dans l'actionneur.

Cette unité de traitement d'informations 102 est adaptée pour l'exploitation du signal de commande engendré par le capteur à effet hall 96 et pour commander l'actionneur noté 104 du frein de stationnement, cet actionneur agissant sur des mâchoires 106. En particulier, l'unité 102 est adaptée pour ne permettre une exploitation du signal de commande engendré par le transducteur 16 que lorsque les deux contacteurs 98 sont enfoncés et détectent ainsi un mouvement du mécanisme à commande manuelle.

Plus précisément, l'unité de traitement d'informations 102 est adaptée pour ne commander l'actionneur que lors d'un changement d'état des deux contacts 98, ce changement d'état résultant de l'enfoncement du bras 26 par appui sur la poignée 36.

Le dispositif de commande représenté aux figures fonctionne de la manière suivante.

Au repos, le bras 26 est sollicité par le ressort de rappel 64 vers une position dans laquelle son extrémité de commande 26 est écartée de l'arbre 28. Dans cette position, constituant une position bloquée, l'extrémité 54A de la tige 54 est reçue dans l'une des encoches 74 du peigne ménagé dans la paroi latérale 24. Ainsi, le bras 26 ne peut être déplacé accidentellement en rotation autour de l'arbre 28 puisque l'extrémité 54 de la tige est maintenue par les deux flancs délimitant l'encoche 74.

Pour la commande des mâchoires du frein de stationnement, le chauffeur du véhicule appuie d'abord sur la poignée 36 afin de dégager l'extrémité 54A de la tige, de l'encoche dans laquelle elle est prisonnière. Cette libération s'effectue lors du déplacement en translation du bras suivant une course de déverrouillage. Le bras 26 passe alors d'une position bloquée, dans laquelle le déplacement angulaire du bras est impossible, à une position libérée dans laquelle le mouvement du bras autour de l'arbre 28 est rendu possible.

Lors de ce déplacement du bras 26, les deux contacts 98 se trouvent enfoncés, ce qui conduit à un changement de leur état. Le changement d'état des contacts 98 constitue une information représentative de la détection d'un mouvement du bras. Cette information est adressée à l'unité de traitement d'informations 102. Celle-ci, en réponse à cette information, va effectuer un traitement des signaux de commande reçus du capteur à effet hall 96 pendant une durée prédéterminée pour engendrer un signal de pilotage de l'actionneur. Avant enfoncement des contacts 98 les signaux de commande reçus étaient inexploités, aucun signal de pilotage n'étant engendré par l'unité de traitement d'informations 102.

Après enfoncement de la poignée 36, l'utilisateur déplace celle-ci angulairement autour de l'arbre 28. Ce basculement du bras 26 provoque un déplacement en translation de l'aimant 88 par rapport au capteur à effet hall 96. La variation de distance séparant l'aimant 88 du capteur à effet hall 96 conduit à une modification continue du signal de commande adressé par le capteur à effet hall à l'unité de traitement d'informations 102. A partir de ce signal, l'unité de traitement d'informations 102 engendre un signal de pilotage de l'actionneur 104 du frein de stationnement et pilote l'actionneur en fonction de ce signal.

Après déplacement du bras 26 jusqu'à la position désirée, le chauffeur relâche la pression exercée sur la poignée 36, de sorte que, sous l'action du ressort 64, le bras 26 retourne dans une position bloquée dans laquelle l'extrémité 54A de la tige est maintenue dans une encoche 74 du peigne de la paroi 24.

L'exploitation par l'unité de traitement d'informations des signaux de commande reçus du capteur à effet hall cesse dès le relâchement de la poignée 36 et le changement d'état des contacts 98. Ainsi, l'actionneur du frein ne peut plus être commandé, l'unité de traitement d'informations 102 n'assurant alors plus l'exploitation d'un éventuel signal de commande reçu et n'engendrant plus de signal de pilotage de l'actionneur, tant que les contacts 98 ne sont pas à nouveau enfoncés.

On comprend qu'avec un tel dispositif, le bras 26 devant être d'abord déplacé suivant une course de déverrouillage avant de pouvoir être déplacé suivant une course d'actionnement du transducteur, le dispositif de commande ne peut être accidentellement déclenché par un occupant du véhicule heurtant la poignée 36.

En outre, le signal de commande issu du transducteur 16 ne pouvant être exploité pour la commande de l'actionneur du frein de stationnement que lorsque les deux contacts 98 ont vu leur étant modifié sous l'action du déplacement du bras 26, les mâchoires du frein de stationnement ne peuvent être serrées accidentellement lors du déplacement du véhicule.

En effet, même en présence de perturbations électromagnétiques intenses, donnant naissance à des signaux de commande erronés depuis le transducteur, les mâchoires de frein ne peuvent être commandées, puisque le signal erroné, éventuellement reçu par l'unité de traitement d'informations, n'est pas pris en compte, l'exploitation de ce signal n'étant assurée qu'après un changement d'état préalable des deux contacts 98.

La présence des deux contacts 98 prévient un risque de défaillance de l'un des contacts, le dispositif de commande ne pouvant fonctionner si seul l'un des contacts subit un changement d'état lors du déplacement du bras 26.

## Revendications

1. Dispositif de commande d'un frein de stationnement électrique d'un véhicule automobile, du type comportant un bâti (12) à l'intérieur duquel sont reçus un transducteur (16) et un mécanisme à commande manuelle d'actionnement du transducteur, ledit transducteur (16) étant adapté pour produire un signal de commande du frein de stationnement, ledit mécanisme à commande manuelle comportant un organe (26) de commande qui est déplaçable par rapport au bâti (12) suivant une course d'actionnement du transducteur (16), et, en outre, suivant une course de déverrouillage entre une position bloquée, dans laquelle le mouvement de l'organe de commande (26) suivant ladite course d'actionnement est impossible, et une position libérée, dans laquelle le mouvement de l'organe de commande (26) suivant ladite course d'actionnement est possible, **caractérisé en ce que** l'organe de commande (26) est déplaçable en translation par rapport au bâti (12) suivant ladite course de déverrouillage.

2. Dispositif selon la revendication 1, **caractérisé en ce que** l'organe de commande (26) est articulé par rapport au bâti (12) pour son déplacement suivant ladite course d'actionnement.

3. Dispositif selon la revendication 2, **caractérisé en ce que** l'organe de commande comporte un bras (26) comportant une lumière oblongue (34) au travers de laquelle est engagé un arbre (28) d'articulation du bras (26), lequel arbre (28) est porté par le bâti (12).

4. Dispositif selon l'une quelconque des revendications précédentes, **caractérisé en ce que** le mécanisme à commande manuelle comporte au moins un ressort (64) de sollicitation de l'organe de commande (26) vers une position bloquée.

5. Dispositif selon les revendications 3 et 4 prises ensemble, **caractérisé en ce que** le mécanisme à commande manuelle comporte au moins un flasque (44) accouplé, en rotation, audit bras (26) articulé autour de l'arbre (28) d'articulation, et **en ce que** ledit ressort (64) de sollicitation de l'organe de commande vers une position bloquée est disposé entre au moins un flasque (44) et le bras (26).

6. Dispositif selon l'une quelconque des revendications précédentes, **caractérisé en ce que** le bâti (12) et l'organe de commande (16) comportent des profils (54A, 74) complémentaires en saillie et en creux adaptés pour coopérer lorsque l'organe de commande (16) est dans une position bloquée, et pour être écartés les uns des autres lorsque l'organe de commande (26) est dans une position libérée.

7. Dispositif selon la revendication 6, **caractérisé en ce que** le bâti (12) comporte une paroi (24) entaillée délimitant un peigne formant une succession d'encoches (74), et **en ce que** l'organe de commande (26) comporte au moins une protubérance (54A) destinée à être reçue dans une encoche (74) du peigne lorsque l'organe de commande (26) est dans une position bloquée.

8. Dispositif selon l'une quelconque des revendications précédentes, **caractérisé en ce que** le mécanisme d'actionnement comporte au moins un ressort (51) de sollicitation de l'organe de commande (26) vers une position prédéterminée de ladite course d'actionnement.

9. Dispositif selon l'une quelconque des revendications précédentes, **caractérisé en ce que** ledit transducteur (16) est adapté pour produire un signal continument variable en fonction de la position de l'organe de commande (26) sur la course d'actionnement du transducteur.

10. Dispositif selon la revendication 9, **caractérisé en ce que** ledit transducteur est un capteur (96) à effet hall et l'organe de commande comporte un aimant (88).

11. Frein de stationnement électrique comportant un actionneur électrique (104) et un dispositif de commande de l'actionneur électrique selon l'une quelconque des revendications précédentes.

## Claims

1. Device for the control of an electric parking brake of an automotive vehicle, of the type which includes a frame (12) into which fit a transducer (16) and a manual control mechanism for operating the transducer, where the said transducer (16) is designed to produce a signal for controlling the parking brake, where the said manual control mechanism includes a control element (26) which can move in relation to the frame (12) along an operating path of the transducer (16) and, in addition, along a release path between a locked position, in which movement of the control element (26) along the said operating path is impossible, and a free position, in which movement of the control element (26) along the said operating path is possible, **characterised by** the fact that the control element (26) can move in translation in relation to the frame (12) along the said release path.

2. Device according to claim 1, **characterised by** the fact that the control element (26) is articulated in relation to the frame (12) in order that it can move along the said operating path.

3. Device according to claim 2, **characterised by** the fact that the control element includes an arm (26) containing an oblong hole (34) through which a shaft (28) is engaged for articulation of the arm (26), where the shaft (28) is carried by the frame (12).

4. Device according to any of the preceding claims, **characterised by** the fact that the manual control mechanism includes at least one spring (64) forcing the control element (26) towards a locked position.

5. Device according to claims 3 and 4 taken together, **characterised by** the fact that the manual control mechanism includes at least one guide (44) coupled so as to rotate with the said arm (26) articulated around the articulation shaft (28), and by the fact that the said spring (64) forcing the control element towards a locked position is arranged between at least one guide (44) and the arm (26).

6. Device according to any of the preceding claims, **characterised by** the fact that the frame (12) and the control element (16) have complementary protruding and recessed profiles (54A, 74) designed to engage together when the control element (16) is in the locked position, and to be separated when the control element (26) is in a free position.

7. Device according to claim 6, **characterised by** the fact that the frame (12) includes a notched wall (24) which bears a rack forming a series of slots (74), and by the fact that the control element (26) carries at least one protuberance (54A) designed to fit into a slot (74) in the rack when the control element (26) is in a locked position.

8. Device according to any of the preceding claims, **characterised by** the fact that the operating mechanism includes at least one spring (51) forcing the control element (26) towards a predetermined position in the said operating path.

9. Device according to any of the preceding claims, **characterised by** the fact that the said transducer (16) is designed to produce a continuously variable signal which depends on the position of the control element (26) in the transducer operating path.

10. Device according to claim 9, **characterised by** the fact that the said transducer is a Hall Effect sensor (96) and that the control element includes a magnet (88).

11. Electric parking brake which includes an electric actuator (104) and a control device for the electric actuator according to any of the preceding claims.

## Patentansprüche

1. Steuervorrichtung für eine elektrische Parkbremse eines Kraftfahrzeugs, des Typs mit einem Gehäuse (12), in dem ein Wandler (16) und ein Mechanismus mit manueller Steuerung zur Betätigung des Wandlers aufgenommen sind, wobei der Wandler (16) so beschaffen ist, dass er ein Steuersignal der Parkbremse erzeugt, wobei der Mechanismus mit manueller Steuerung ein Steuerelement (26) umfasst, das in Bezug auf das Gehäuse (12) längs einer Bahn zum Betätigen des Wandlers (16) und außerdem längs einer Entriegelungsbahn zwischen einer blockierten Position, in der die Bewegung des Steuerelements (26) längs der Betätigungsbahn unmöglich ist, und einer freigegebenen Position, in der die Bewegung des Steuerelements (26) längs der Betätigungsbahn möglich ist, verlagerbar ist, **dadurch gekennzeichnet, dass** das Steuerelement (26) translatorisch in Bezug auf das Gehäuse (12) längs der Entriegelungsbahn verlagerbar ist

2. Vorrichtung nach Anspruch 1, **dadurch gekennzeichnet, dass** das Steuerelement (26) an dem Gehäuse (12) angelenkt ist, um sich längs der Betätigungsbahn zu verlagern.

3. Vorrichtung nach Anspruch 2, **dadurch gekennzeichnet, dass** das Steuerelement einen Arm (26) umfasst, der ein Langloch (34) aufweist, durch das hindurch eine Welle (28) für die Anlenkung des Arms (26) in Eingriff ist, wobei die Welle (28) durch das Gehäuse (12) unterstützt ist.

4. Vorrichtung nach einem der vorhergehenden Ansprüche, **dadurch gekennzeichnet, dass** der Mechanismus mit manueller Steuerung wenigstens eine Feder (64) für die Vorbelastung des Steuerelements (26) in eine blockierte Position umfasst.

5. Vorrichtung nach den Ansprüchen 3 und 4 zusammengenommen, **dadurch gekennzeichnet, dass** der Mechanismus mit manueller Steuerung -wenigstens einen Flansch (44) umfasst, der rotatorisch mit dem Arm (26) gekoppelt ist, der um die Gelenkwelle (28) angelenkt ist, und dass die Feder (64) für die Vorbelastung des Steuerelements in eine blockierte Position zwischen wenigstens einem Flansch (44) und dem Arm (26) angeordnet ist

6. Vorrichtung nach einem der vorhergehenden Ansprüche, **dadurch gekennzeichnet, dass** das Gehäuse (12) und das Steuerelement (16) komplementäre vorstehende und zurückspringende Profile (54A, 74) umfasst, die so beschaffen sind, dass sie zusammenwirken, wenn sich das Steuerelement (16) in einer blockierten Position befindet, und voneinander beabstandet sind, wenn sich das Steuerelement (26) in einer freigegebenen Position befindet

7. Vorrichtung nach Anspruch 6, **dadurch gekennzeichnet, dass** das Gehäuse (12) eine geschlitzte Wand (24) aufweist, die einen Kamm begrenzt, der eine Folge von Nuten (74) bildet, und dass das Steuerelement (26) wenigstens einen Vorsprung (54A) aufweist, der dazu bestimmt ist, in einer Nut (74) des Kamms aufgenommen zu werden, wenn sich das Steuerelement (26) in einer blockierten Position befindet.

8. Vorrichtung nach einem der vorhergehenden Ansprüche, **dadurch gekennzeichnet, dass** der Betätigungsmechanismus wenigstens eine Feder (51) für die Vorbelastung des Steuerelements (26) in eine vorgegebene Position der Betätigungsbahn umfasst.

9. Vorrichtung nach einem der vorhergehenden Ansprüche, **dadurch gekennzeichnet, dass** der Wandler (16) so beschaffen ist, dass er ein Signal erzeugt, das als Funktion der Position des Steuerelements (26) auf der Betätigungsbahn des Wandlers kontinuierlich veränderlich ist.

10. Vorrichtung nach Anspruch 9, **dadurch gekennzeichnet, dass** der Wandler ein Hall-Effekt-Sensor (96) ist und das Steuerelement einen Magneten (88) umfasst.

11. Elektrische Parkbremse, die einen elektrischen Aktor (104) und eine Steuervorrichtung für den elektrischen Aktor nach einem der vorhergehenden Ansprüche umfasst.
